# EUROPEAN PATENT APPLICATION

(11) **EP 3 133 804 A1**
(43) Date of publication of application: **22.02.2017**
(21) Application number: 14889357.1
(22) Date of filing: 15.10.2014
(51) Int. Cl.: H04N 5/225

(54) **METHOD FOR CORRECTING IMAGE FROM WIDE-ANGLE LENS AND DEVICE THEREFOR**

(30) Priority: 16.04.2014 KR 20140045611
(71) Applicant: Hinet Co., Ltd., Seo-gu Daejeon (KR)
(72) Inventor: CHOI, Yuong Sam, Seo-gu Daejon (KR); KIM, Yuk Tae, Daejeon 306-761 (KR)
(74) Representative: Zardi, Marco
(86) International application number: PCT/KR2014/009658
(87) International publication number: WO 2015/160052

(57) **Abstract**

The present invention relates to a method for correcting the distortion of an image due to a wide-angle lens, and a device therefor, wherein the image correction method and the device therefor are capable of quickly correcting the distortion of an image with low resources since the amount of computation is small.

## Description

### Technical Field

The present invention relates to a method for correcting a distortion of an image due to a wide-angle lens, and a device therefor, wherein the image correction method and the device therefor are capable of quickly correcting the distortion of an image with low resources since the amount of computation is small.

### Background Art

In general, a fisheye lens refers to a lens with a wide field of view of about 180 degrees. A camera equipped with a wide-angle lens, such as a fisheye lens has a shorter focal length and a wider field of view, compared to a camera with a standard lens, and exhibits very severe radial distortion in an acquired image. An image acquired by a wide-angle camera shows nonlinearity, and hence in order to correct the distortion due to such nonlinearity, a method for reverse analysis of optical principles is generally used. However, distortion factors, such as an optical center, a focal length, a reflective index, etc., and a distortion correction formula are hard to correctly represent, so that perfect linearity tends to be impossible to realize. In addition, it takes a large amount of resources to correct the distortion according to the distortion correction formula, and therefore it is difficult to display an image in real time.

### Technical Problem

An objective of the present invention is to provide a method for correcting a distortion, wherein the method enables correction of a distorted image with a small amount of resources and can be easily applied to a variety of types of wide-angle lenses without acquiring distortion factors.

### Technical Solution

According to one embodiment of the present invention, there is provided a method for correcting a distortion of an image pickup area due to a wide-angle lens, the method including: setting a horizontal reference line and a vertical reference line both of which cross the center of the image pickup area; setting a part of curves of ellipses each of which has a part of the horizontal reference line as a major axis and a part of the vertical reference line as a minor axis with respect to the center; converting a y-value of a pixel belonging to the part of the curves of ellipses into a y-value on the minor axis of the ellipse; and storing a correspondence relation between coordinates of the pixel belonging to the part of the curves of ellipses and the converted coordinates as an entry of a distortion correction table.

A distance between a length of a minor axis of a first ellipse and a length of a minor axis of a second ellipse among the ellipses may be a multiple of a first setting value.

A difference between a length of a major axis of the first ellipse and a length of a major axis of the second ellipse may be a multiple of a second setting value, the second setting value may be smaller than the first setting value, and the first ellipse and the second ellipse may do not have an intersection point therebetween.

The part of the curves of ellipses may belong to one of quadrants of an orthogonal coordinate system, and a correction area of the distortion correction table may belong to a display area.

The method may further include adding an additional entry that is symmetrical to the entry of the distortion correction table with respect to at least one of the horizontal and vertical reference lines.

The method may further include: setting a new horizontal reference line and a new vertical reference line corresponding to at least one of a user's control, a user's motion and a direction of a display device; and generating a second distortion correction table by rotating coordinates of entries of the distortion correction table corresponding to an angle between the existing horizontal reference line and the new horizontal reference line.

The second setting value may be varied within a predetermined range according to at least one of the wide-angle lens and a distance between the wide-angle lens and an object.

According to one embodiment of the present invention, there is provided an image correction device including: a reference setting unit configured to divide a sample image acquired through a wide-angle lens into an image pickup area in which an image is formed and a non-image pickup area in which an image is not formed and set a horizontal reference line and a vertical reference line both of which cross the center of the image pickup area; a table generating unit configured to set a part of curves of ellipses each of which has a part of the horizontal reference line as a major axis and a part of the vertical reference line as a minor axis with respect to the center and convert a y-value of a pixel belonging to the part of the curves of ellipses into a y-value on the minor axis of the ellipse; and a storage unit configured to store a correspondence relation between coordinates of the pixel belonging to the part of the curves of ellipses and the converted coordinates as an entry of a distortion correction table.

According to one embodiment of the present invention, there is provided a security control device including: a plurality of cameras, each of which is equipped with a wide-angle lens; a main server configured to receive wide-angle images from each of the plurality of cameras and control a display device to display at least one of the wide-angle images; and a sub-sever configured to correct at least one of the wide-angle images in response to a correction command received from the main server and transmit a corrected image to the main server,wherein at least one of the main server and the sub-server include: a reference setting unit configured to divide an image to be corrected among the plurality of the wide-angle images into an image pickup area where an image is formed and a non-image pickup area where an image is not formed and set a horizontal reference line and a vertical reference line which cross the center of the image pickup area; a table converting unit configured to configured to set a part of curves of ellipses each of which has a part of the horizontal reference line as a major axis and a part of the vertical reference line as a minor axis with respect to the center and convert a y-value of a pixel belonging to the part of the curves of ellipses into a y-value on the minor axis of the ellipse; a storage unit configured to store a correspondence relation between coordinates of the pixel belonging to the part of the curves of ellipses and the converted coordinates as an entry of a distortion correction table; and an image correction unit configured to generate the corrected image by correcting the image to be corrected using the distortion correction table.

In addition, the main server may control the display device to display at least one of the plurality of wide-angle images and a plurality of corrected images which are obtained by correcting the respective wide-angle images, control the display device to display a corrected image obtained by correcting a first wide-angle image of the plurality of wide-angle images and all of the wide-angle images, other than the first wide-angle image, and control the display device to display the plurality of corrected images in response to a second command from the user.

A plurality of sub-servers may be provided, and the main server may check a load thereof and a load of each of the plurality of sub-servers and control the plurality of original (wide-angle) images to be corrected in an order of the smallest load of the server to the largest.

### Advantageous Effects

A method for correcting an image of a wide-angle lens according to the present invention does not require a complicated calculation and, hence, quickly corrects an image with a small amount of computation, thereby being able to display an image in real time. In addition, the method can be easily applied to the existing wide-angle lens and hence can be applied to a currently installed wide-angle lens.

### Description of Drawings

FIG. 1 illustrates a sample image produced by a wide-angle lens;
FIG. 2 is a diagram illustrating correction reference set by a reference setting unit according to one embodiment of the present invention;
FIGS. 3 to 7 are diagrams for describing principles of table generation by a table generating unit according to one embodiment of the present invention;
FIG. 8 illustrates a distortion-corrected image;
FIG. 9 is a block diagram illustrating an image distortion correction system according to one embodiment of the present invention;
FIG. 10 is a diagram illustrating a base for creating a table of an image pickup area according to another embodiment of the present invention;
FIG. 11 is a flowchart illustrating a method for image correction according to one embodiment of the present invention;
FIG. 12 illustrates images of an input screen for processing a user motion;
FIG. 13 is a block diagram illustrating a security control system according to one embodiment of the present invention;
FIG. 14 is a diagram illustrating embodiments of a screen of the security control system in accordance with the present invention; and
FIG. 15 is a flowchart illustrating an image processing method of the security control system according to one embodiment of the present invention.

### Mode for Invention

The present invention now will be described more fully hereinafter with reference to the accompanying figures, in which embodiments of the invention are shown.

It will be understood that, although the terms first, second, etc. may be used herein to describe various elements, these elements should not be limited by these terms. These terms are only used to distinguish one element from another. For example, a first portion could be termed a second portion, and, similarly, a second portion could be termed a first portion without departing from the teachings of the disclosure.

When an element is referred to as being "on," "connected" or "coupled" to another element, then the element can be directly on, connected or coupled to the other element and/or intervening elements may be present, including indirect and/or direct variants. In contrast, when an element is referred to as being "directly connected" or "directly coupled" to another element, there are no intervening elements present. In addition, it is understood that when a first element is connected to or accesses a second element in a network, the first element and the second element can transmit and receive data therebetween.

In the following description, usage of suffixes such as 'module' or 'unit' used for referring to elements is given merely to facilitate explanation of the present invention, without having any significant meaning by itself. Thus, the 'module' and 'unit' may be used together.

When the elements described herein are implemented in the actual applications, two or more elements may be combined into a single element, or one element may be subdivided into two or more elements, as needed.

A method for correcting a distortion of a wide-angle image according to the present invention may be performed by various types of devices.

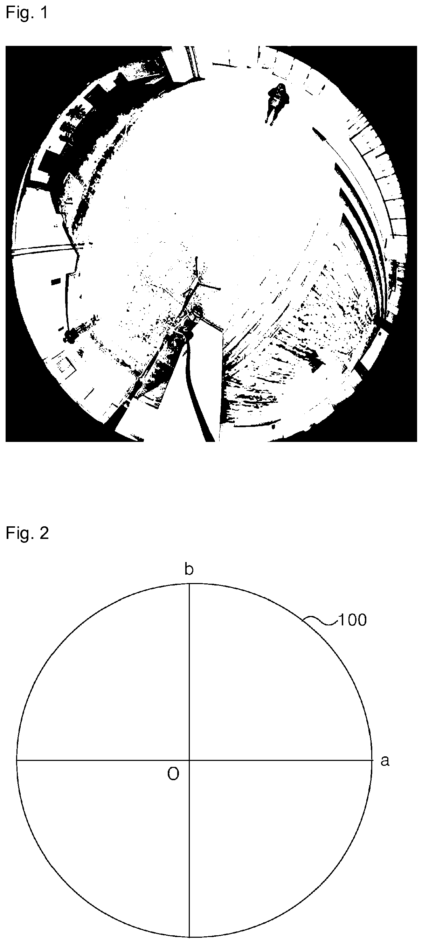

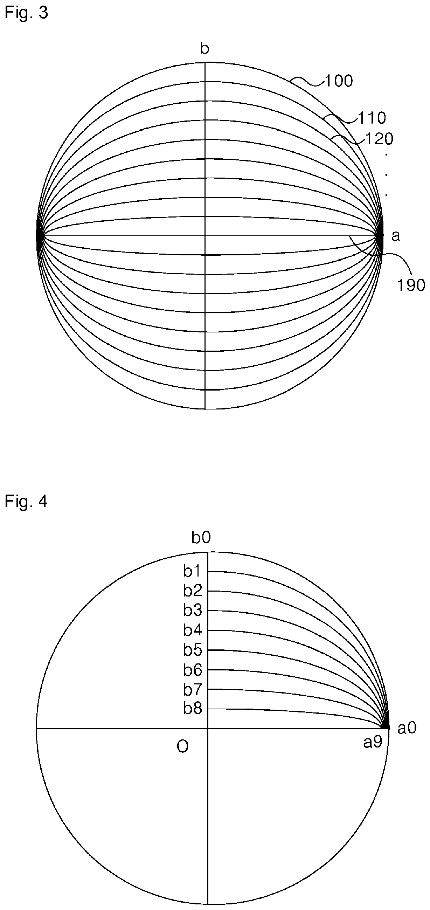

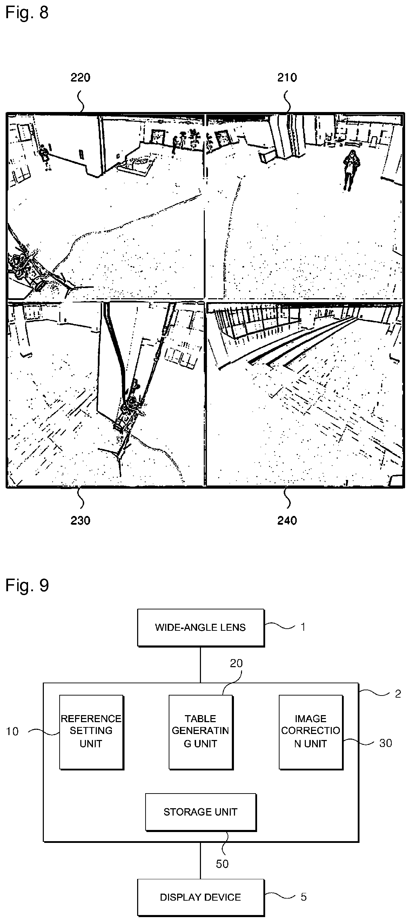

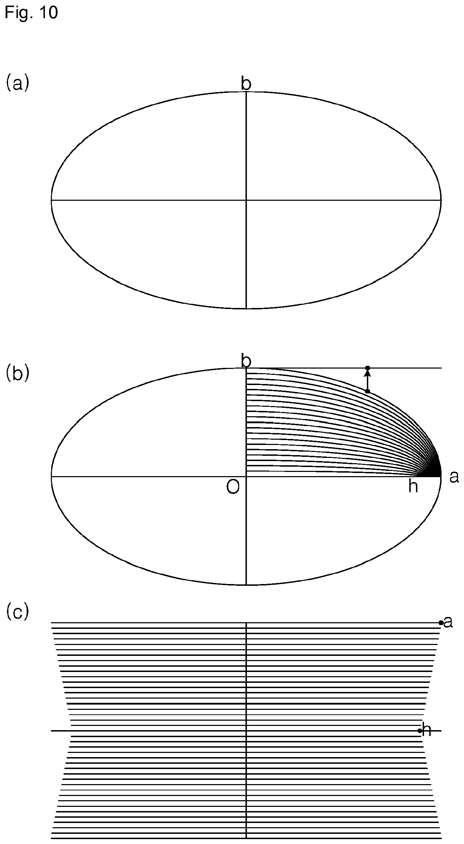

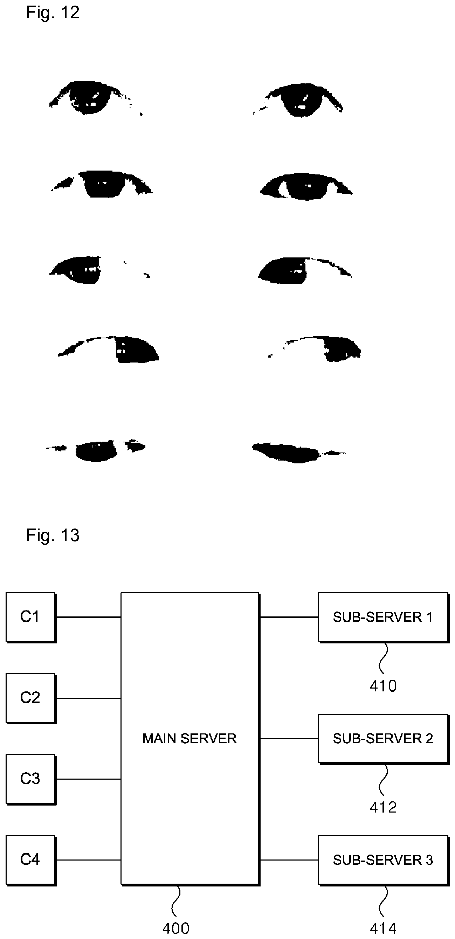

FIG. 1 illustrates a sample image produced by a wide-angle lens; FIG. 2 is a diagram illustrating correction reference set by a reference setting unit according to one embodiment of the present invention; FIGS. 3 to 7 are diagrams for describing principles of table generation by a table generating unit according to one embodiment of the present invention; FIG. 8 illustrates a distortion-corrected image; FIG. 9 is a block diagram illustrating an image distortion correction system according to one embodiment of the present invention; FIG. 10 is a diagram illustrating a base for creating a table of an image pickup area according to another embodiment of the present invention; and FIG. 12 illustrates images of an input screen for processing a user motion.

Referring to FIG. 9, an image distorting correction system includes a wide-angle lens 1 which captures an image, an image correction device 2 which corrects the image received from the wide-angle lens 1, and a display device 5 which displays the image corrected by the image correction device 2.

The image correction device 2 may include a reference setting unit 10, a table generating unit 20, an image correction unit 30, and a storage unit 50.

The storage unit 50 may store programs for processing and control of the reference setting unit 10, the table generating unit 20, and the image correction unit 30 and may perform a function for temporarily or permanently store input data or data to be output (e.g., an image from the wide-angle lens, a table generated by the table generating unit 20, a corrected image, and the like).

The storage unit 50 may include at least one of storage media of various types, such as a flash memory type, a hard disk type, a multimedia card micro type, a card-type memory (e.g., SD or XD memory, etc.) RAM, and ROM. In addition, a device in a remote site, for example, web storage over the Internet, may be used.

The reference setting unit 10 may divide a sample image obtained through the wide-angle lens into an image pickup area where an image is formed and a non-image pickup area where an image is not formed. In FIG. 1, the black-colored outer portion is a non-image pickup area and corresponds to an inner peripheral surface of a housing of a camera module which is commonly configured as a barrel shape. In the present example, the image pickup area obtained by the camera module is circular-shaped, but is not limited thereto. For example, the image pickup area may have an elliptical shape with a horizontal axis longer than a vertical axis or have a shape of a truncated circle or oval.

To distinguish the image into the image pickup area and the non-image pickup area, existing methods for detecting edges from an image may be used for distinguishing between a black color in the non-image pickup area and a variety of colors in the image pick-up area. The sample image may be preferably mostly white, but is not limited thereto. An appropriate outermost line for dividing between an image pickup area and a non-image pickup area may be obtained from a number of sample images, or an appropriate outermost line may be acquired using points that are symmetrical vertically, horizontally, or with respect to a point.

Referring to FIG. 2, the outermost line 100 of the image pickup area obtained by the reference setting unit 10 may be circle. The reference setting unit 10 may determine the center O of the image pickup area. The reference setting unit 10 may set the center of the sample image as the center O of the image pickup area, calculate the center O from the coordinates of the outermost line 100, or set the coordinates chosen by a user as the center O. A case in which the image pickup area is elliptical shaped is illustrated in FIG. 10(a).

The reference setting unit 10 may set a horizontal reference line and a vertical reference line both of which cross the center O of the image pickup area. The horizontal and vertical reference lines may correspond to at least one of preset values, user's controls, user's motions and directions of the display device. For example, the reference setting unit 10 may set a horizontal line and a vertical line of an image acquired by an image sensor which detects light incoming through the wide-angle lens, or the reference setting unit 10 may set the horizontal and vertical reference lines as predetermined directions. Each of the horizontal and vertical reference lines may have one or two or more lines set for distortion correction.

The reference setting unit 10 may set the horizontal and vertical reference lines corresponding to input values received according to a user's control of an interface, for example, a mouse, a keyboard, a touch panel, etc. The reference setting unit 10 may set the horizontal and vertical reference lines corresponding to a user's motion, for example, a motion of a user's arm obtained by analyzing an image received via a camera or a movement of pupils as shown in FIG. 12. In the case where the display device 5 has a large screen, the reference setting unit 10 may set the horizontal and vertical reference lines such that an image which corresponds to a direction of the user's pupils is displayed in a part of the large screen. The image correcting device 2 may further include an image receiving unit (camera) (not shown) for capturing the motion or pupils of the user. In the case where the display device 5 which displays an image produced by the image correction unit 30 is a portable device, the reference setting unit 10 may set the horizontal and vertical reference lines corresponding to a direction of the display device 5. To this end, the display device 5 may use a built-in compass and transmit a bearing of a direction in which the screen is displayed to a distortion correction device 3.

Once the reference setting unit 10 has set the horizontal and vertical reference lines, the reference setting unit 10 may obtain the coordinates of a reference for the major axis and the minor axis. A reference major axis may be the horizontal reference line relative to the outermost line 100, i.e., the diameter of the outermost line 100 of the horizontal axis, and a reference minor axis may be the vertical reference line relative to the outermost line 100, i.e., the diameter of the outermost line 100 of the vertical axis. The reference setting unit 10 may calculate a length from the coordinates of the major axis a and the minor axis b.

For convenience of description, the present embodiment assumes that the center O is the origin of an orthogonal coordinate system.

Referring to FIG. 3, the table generating unit 20 may set a plurality of curves in the outermost line 100. Arbitrary two curves out of the outermost line 100 and the inner curves 110, 120 to 190 may do not have an intersection point or may have two intersection points. The plurality of curves 100, 110, 120 to 190 may have major axes that are equal to or smaller than the major axis of the outermost line 100 and minor axes that are smaller than the minor axis of the outermost line 100. The major axis of each of the inner curves 110, 120 to 190 may be preferably smaller than the major axis of the outermost line 100. In the present embodiment, a circle (the outermost line 100) is assumed to be an ellipse whose major minor axes have the same length, and a straight line 190 is assumed to be an ellipse which has a minor axis with a length of 0.

A difference in length of major axis between a first line 110 and a second line 120 which are adjacent to each other may be preferably a preset constant. The length of the minor axis of the most inner curve 190 may be preferably 0.

A length of the major axis of an arbitrary curve among the inner curves 110, 120 to 190 may be preferably greater than 0.95 and less than 1 of the length of the major axis of the outermost line 100. Such a ratio may vary according to characteristics or a type of the wide-angle lens, a distance to an object, and the like. A difference in length of minor axis between the adjacent first and second curves 110 and 120 may be a preset constant. It may be preferable that the difference in length of major axis between the adjacent inner curves is smaller than the difference in length of minor axis.

Referring to FIG. 4, the table generating unit 20 may generate a lookup table (distortion correction table) regarding coordinates in one quadrant. This is because resource reduction and load reduction can be achieved. The table generating unit 20 may obtain major axis coordinates a0 to a9 and minor axis coordinates b0 to b8 and O of the inner curves.

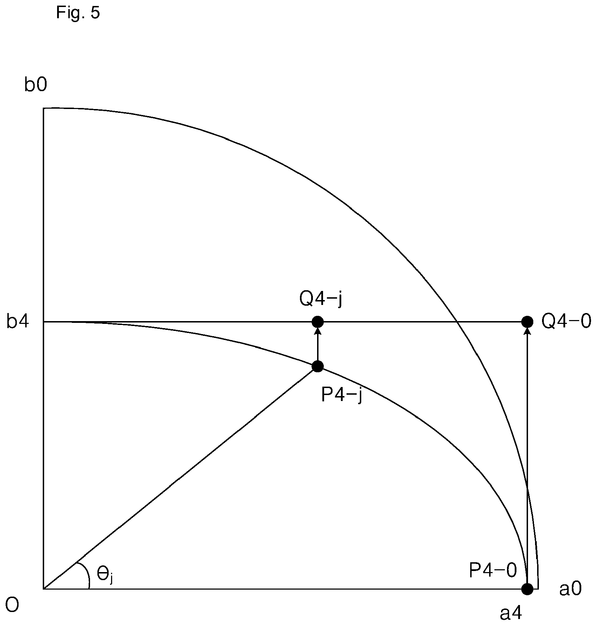

Referring to FIG. 5, the table generating unit 20 may vertically move coordinates of a pixel belonging to the same curve to the horizontal line that passes a minor axis of the curve and generate a distortion correction table that specifies the coordinates as one entry. The table generating unit 20 may obtain information that the coordinates of one end of a major axis of a fourth curve is (a4, 0) and the coordinates of one end of a minor axis is (0, b4). As an example of an entry, the coordinates of a point P4-0 of the fourth curve and the coordinates of a point Q4-0 to which the point P4-0 is vertically moved may be set as one entry, and each coordinate of a point Q4-j to which a point P4-j is vertically moved may be set as one entry. The table generating unit 20 may specify coordinates of the point P4-0 on the horizontal reference line as (a4, 0) and coordinates of the point Q4-0 as (a4, b4). The table generating unit 20 may calculate orthogonal coordinates of the arbitrary point P4-j using a polar coordinate system of an elliptic function. By doing so, the coordinates of point P4-j are given as (a4*cosθj, b4*sinθj). The coordinates of point Q4-j to which the point P4-j is vertically moved are given as (a4*cosθj, b4).

The table generating unit 20 may calculate coordinates of the image pickup area and coordinate of correction plane through coding as below and generate a lookup table.

### 1. Definition

n is the number of inner curves;
m is the number of coordinates to be obtained in the first quadrant of each inner curve;
Δx is the decrement of x-axis of an inner curve (a/n >Δx>= 0.95 a/n);
Δy is the decrement of y-axis of an inner curve (Δy = b/n);

### 2. Coordinates of image pickup area (P(x, y))

```
for i = 0 ~ n
       { for j = 0 ~ m
       { θ = π/2 * j/m
              x[i][j] = (a - Δx * i) * cos θ
              y[i][j] = (b - Δy * i) * sin θ
       }
       }
```

### 3. Coordinates of correction area (Q(u, v))

```
for i = 0 ~ n
       { for j = 0 ~ m
              Q(u[i][j], v[i][j]) = P(x[i][j], b - Δy * i)
       }
```

By using the above coding, the table generating unit 20 may generate each entry P[i][j] -> Q[i][j] of the distortion correction table.

The distortion correction table is based on a fact that when y-values of pixels belonging to each same curve 100 to 190 are changed to the maximum y-value of the pertinent curve, an image acquired through a wide-angle lens can be modified to appear more natural to the user's eyes. Since distortion increases toward the boundary of the wide-angle lens, it is construed that when an image close to a boundary region is moved away from the center of the image pickup area, the distorted image difficult to be recognized may be corrected to be easily recognizable. The distortion correction performed better when the lengths of major axes of the inner curves 110 to 190 were slightly shorter than the length of the major axis of the outermost line.

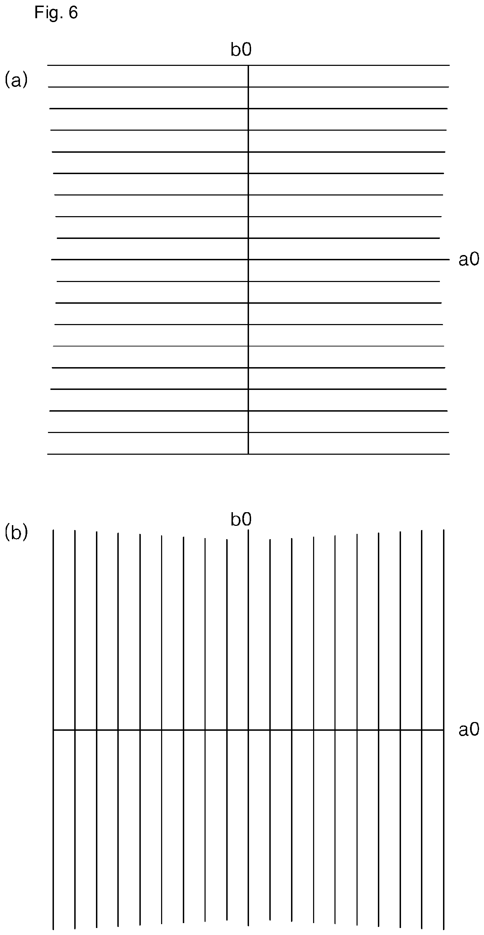

Referring to FIG. 6, it is seen that the circular image pickup area is changed to a rectangular correction area. FIG. 6(a) illustrates a correction area after setting a horizontal line as a horizontal reference line, and FIG. 6(b) illustrates a correction area after setting a vertical line as a vertical reference line. Pixel coordinates of each line in FIG. 6(a) are associated with the plurality of curves 100 to 190 of FIG. 3.

The table generating unit 20 may generate the correction areas as shown in FIG. 6(a) and (b) by mirroring horizontally and vertically and rotating 90 degrees each entry of the distortion correction table obtained through the embodiments shown in FIGS. 4 and 5, without performing the aforementioned calculation. FIG. 10(b) and FIG. 10(c) illustrate the case in which the image pickup area is elliptical-shaped.

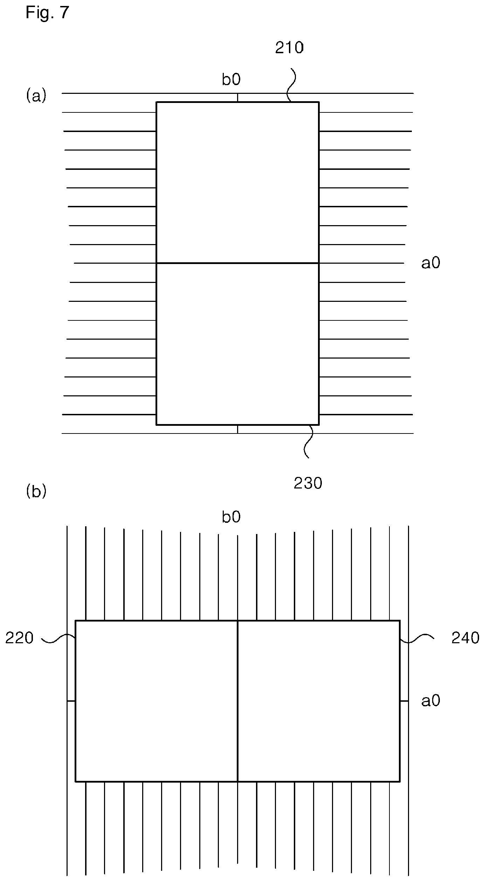

Referring to FIG. 7, the table generating unit 20 may correct the distortion correction table, such that not the entire image on the correction area, but only a part of the image is displayed.

Referring to FIG. 7(a), the table generating unit 20 may set parts of the correction area around the vertical reference line to be display areas 210 and 230. This is because distortion increases farther away from the center. In addition, because an image acquired through the wide-angle lens covers a very wide range, it is preferable to display the image on a number of screens. Display areas 220 and 240 of FIG. 7(b) are set for displaying mainly a region close to the center and displaying a variety of ranges. This is because an image at a position farther from a vertical reference line of a first display area 210 has a higher degree of distortion.

The table generating unit 20 may set the display areas 210, 220, 230, and 240 by deleting an entry whose coordinates on the correction plane do not belong to the display area of FIG. 7 from the distortion correction table.

The image correction unit 30 may generate a corrected image by correcting the image acquired through the wide-angle lens, as shown in FIG. 1, using the distortion correction table. The distortion correction table includes coordinates of each pixel of original image (wide-angle image) and coordinates that correspond to the respective pixel coordinates and are to be moved to the corrected image. The pixel coordinates of the original image may consist of coordinates of the image pickup area, in particular, an area to be displayed. The image correction unit 30 may generate the corrected image by registering values of the distortion correction table, which correspond to the pixel coordinates of the original image, into corresponding coordinates in a distortion correction table of a new image. For an area of the original image that is not different from a previous frame image, the image correction unit 30 may use an area of the previous frame that corresponds to the corrected image without using the distortion correction table. For example, if a difference in pixel between the original image and the previous frame image occurs at one point Pd-1, the image correction unit 30 may acquire coordinates Qd-1 of a corrected image which corresponds to the point Pd-1 and a pixel value Vd using the distortion correction table and replace the corresponding coordinates Qd-1 in a previous frame of the corrected image with the pixel value Vd, thereby generating the current frame of the corrected image.

The image correction unit 30 may display the corrected image on the display device 5, as shown in FIG. 8. It may be preferable that the image correction unit 30 displays a second display area 220 and a fourth display area 240 by changing the direction such that the vertical reference line appear vertically and hence the user can intuitively view the image.

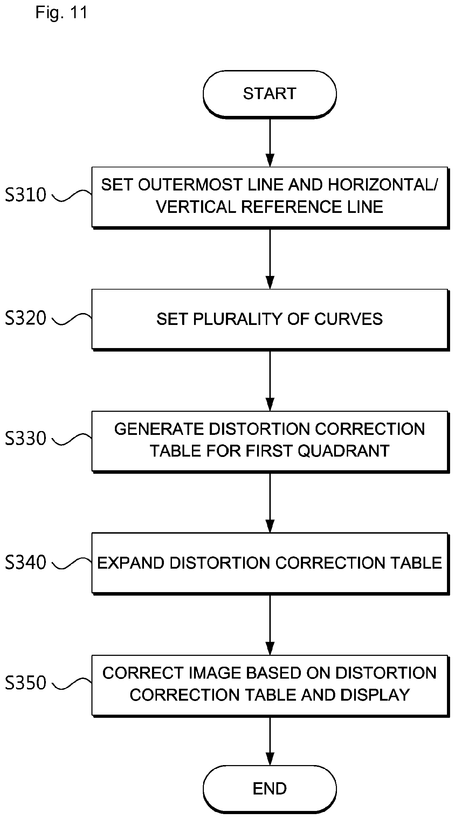

FIG. 11 is a flowchart illustrating a method for image correction according to one embodiment of the present invention. FIGS. 1 to 10 will be referred to.

Referring to FIG. 11, the reference setting unit 10 divides an image acquired through the wide-angle lens into an image pickup area and a non-image pickup area and sets the center O, the outermost line, a horizontal reference line, and a vertical reference line (S310).

The table generating unit 20 sets a plurality of inner curves in the outermost line (S320). The inner curves may be preferably ellipses.

The table generating unit 20 calculates coordinates by moving coordinates on a plurality of curves on the first quadrant to minor axes of the respective curves and generates entries that associate the coordinates of the plurality of curves with the moved coordinates, thereby generating a distortion correction table that consist of a plurality of entries (S320).

The table generating unit 20 adds entries that are symmetrical to the coordinates of the respective entries of the distortion correction table with reference to the vertical or horizontal vertical line, and rotated entries and prepares for generating all areas and a corrected screen to be displayed in which the horizontal reference line is moved according to the user's control (S340).

The image correction unit 30 corrects the image acquired through the wide-angle lens using the distortion correction table which is generated by the table generating unit 20 and stored in the storage unit 50 and then transmits the corrected image to the display device (S350).

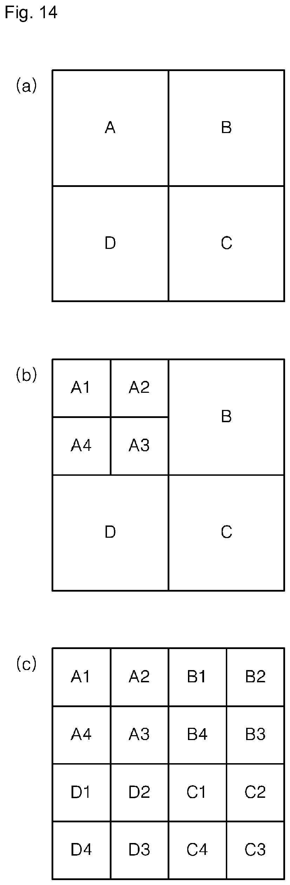

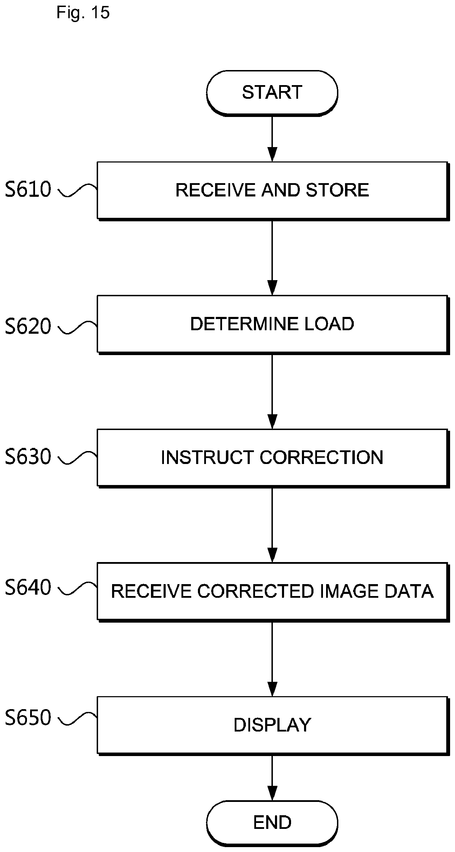

FIG. 13 is a block diagram illustrating a security control system according to one embodiment of the present invention; FIG. 14 is a diagram illustrating embodiments of a screen of the security control system in accordance with the present invention; and FIG. 15 is a flowchart illustrating an image processing method of the security control system according to one embodiment of the present invention. FIGS. 1 to 12 are referred to.

Referring to FIG. 13, the security control system includes a plurality of cameras C1 to C4, a main server 400, and a plurality of sub-servers 410, 412, and 414.

Each of the plurality of cameras C1 to C4 may be equipped with the wide-angle lens 1 of FIG. 1, convert light incoming through the wide-angle lens 1 into a digital image using an image sensor, such as a charge-coupled device (CCD) or a complementary metal-oxide-semiconductor (CMOS), and transmit the digital image to the main server 400. In the present embodiment, communications between the plurality of cameras C1 to C4 and the main server 400 or communications between the main server 400 and the plurality of sub-servers 410, 412, and 414 may be wired or wireless communications. The plurality of cameras C1 to C4 may be properly disposed at places where security, surveillance or control is required. In the drawing, there are four cameras, but the number of cameras is not limited thereto.

The main server 400 may control a display device connected to the main server 400 to display data of an image distorted due to the wide-angle lens, i.e., an image (hereinafter, referred to as an "original image") before correction, or corrected image data. The main server 400 may transmit the original image data or the corrected image data to at least one of the sub-servers 410, 412, and 414. Sub-server 1 410 may control a display device connected thereto to display at least one of the original image and the corrected image.

At least one of the main server 400 and the plurality of sub-servers 410, 412, and 414 may correct the original image. For example, the main server 400 may correct a first original image (from camera C1) of a plurality of original images, and sub-servers 1 to 3 410, 412, and 414 may correct second to fourth original images (images from cameras C2, C3, and C4, respectively), respectively. However, the present invention is not limited thereto, such that one a plurality of original images may be corrected in one server.

The main server 400 and the plurality of sub-servers 410, 412, and 414 may be installed where security or surveillance personnel is deployed. Only a single server may be needed for central control, but for a large coverage, control may be conducted at several locations. In this case, a central server may be located in a central control center, and the sub-servers may be disposed at another place (e.g., a building entrance). The plurality of sub-servers 410, 412, and 414 may not be limited to be disposed in a kind of a simplified control center, but may exist as alternate resources. The sub-servers may establish short-range communication or remote communication with the main server 400 and may be provided as a cloud service to a virtual machine (VM).

Referring to FIG. 14(a), the main server 400 or sub-server 1 410 may control the display device connected thereto to display the first to fourth original images A, B, C, and D in a divided manner. The main server 400 may correct the first image A according to a user's command and control the display device to display the corrected images A1 to A4 in a segmented area of the display device (refer to FIG. 14(b)). The main server 400 may control the corrected images A1 to A4 to be displayed along with the second to fourth original images B to D or to be displayed on the entire screen. The main server 400 may autonomously correct the first original image A or transmit the original image to sub-server 1 410, receive corrected images and then control the received corrected images A1 to A4 to be displayed. In the case where sub-server 1 410 displays first corrected images A1 to A4, sub-server 1 410 may operate corresponding to the main server 400. Referring to FIG. 14(c), the main server 400 may control the display device to display fourth corrected images A1 to A4, B1 to B4, C1 to C4, and D1 to D4 which are obtained by correcting the first to fourth original images A to D according to the user's command. The correction process may be divided up and performed by the main server 400 and the plurality of sub-servers 410, 412, and 414 or may be performed corresponding to the load of each server.

FIG. 15 is a flowchart illustrating a method for correcting an image distortion and display procedures performed by the main server 400. Referring to FIG. 15, the main server 400 receives first to fourth original images A to D from a plurality of cameras C1 to C4 and stores the original images in a storage unit (not shown) (S610). The storage unit may be disposed in the main server 400 or disposed on a web server or a cloud server. It may be preferable that the main server 400 stores only the original images for the sake of reducing a load on storage capacity.

The main server 400 determines which server to process image correction by checking the degrees of load of the main server 400 and the plurality of sub-servers 410, 412, and 414 (S620). In this way, the main server 400 may be able to conduct load control by which a severe load of one server is transferred to another server or a server in an idle state can be prevented. For example, if only one image is to be corrected, the main server 400 may select a server in an idle state or a server with the smallest load to process correction. If there are a plurality of image correction operations to be processed, the main server 400 may assign a first correction operation to a server in an idle state or a server with the smallest load, check again the loads of the servers and assign a second correction operation to a server with the smallest load among the remaining servers. If there are a plurality of image correction operations to be processed, the main server 400 may distribute the correction operations such that the servers process the correction operations according to processing capabilities thereof in the order of the smallest load to the largest.

The main server 400 instructs the server to process the correction to perform the correction process (S630). Thereafter, the main server 400 receives corrected image data (S640) and controls the display device to display the corrected image data (S650). In the case where the correction process is performed in the main server 400, the operation of instructing the correction (S630) and the operation of receiving the corrected image data (S640) may be omitted.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, codes, and code segments for accomplishing the present invention can be easily construed by programmers skilled in the art to which the present invention pertains.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A method for correcting a distortion of an image pickup area due to a wide-angle lens, the method comprising:
setting a horizontal reference line and a vertical reference line both of which cross the center of the image pickup area;
setting a part of curve of ellipse which has a part of the horizontal reference line as a major axis and a part of the vertical reference line as a minor axis with respect to the center;
converting a y-value of a pixel belonging to the part of the curve of ellipse into a y-value on the minor axis of the ellipse; and
storing a correspondence relation between coordinates of the pixel belonging to the part of the curve of ellipse and the converted coordinates as an entry of a distortion correction table.

2. The method of claim 1, wherein a distance between a length of a minor axis of first ellipse and a length of a minor axis of second ellipse is a multiple of a first setting value.

3. The method of claim 2, wherein a difference between a length of a major axis of the first ellipse and a length of a major axis of the second ellipse is a multiple of a second setting value, the second setting value is smaller than the first setting value, and the first ellipse and the second ellipse do not have an intersection point therebetween.

4. The method of claim 1, wherein the part of the curve of ellipse belongs to one of quadrants of an orthogonal coordinate system and a correction area of the distortion correction table belongs to a display area.

5. The method of claim 4, further comprising adding an additional entry that is symmetrical to the entry of the distortion correction table with respect to at least one of the horizontal and vertical reference lines.

6. The method of claim 1, further comprising:
setting a new horizontal reference line and a new vertical reference line corresponding to at least one of a user's control, a user's motion and a direction of a display device; and
generating a second distortion correction table by rotating coordinates of entries of the distortion correction table corresponding to an angle between the existing horizontal reference line and the new horizontal reference line.

7. The method of claim 3, wherein the second setting value is varied within a predetermined range according to at least one of the wide-angle lens and a distance between the wide-angle lens and an object.

8. An image correction device comprising:
a reference setting unit configured to divide a sample image acquired through a wide-angle lens into an image pickup area in which an image is formed and a non-image pickup area in which an image is not formed and set a horizontal reference line and a vertical reference line both of which cross the center of the image pickup area;
a table generating unit configured to set a part of curve of ellipse which has a part of the horizontal reference line as a major axis and a part of the vertical reference line as a minor axis with respect to the center and convert a y-value of a pixel belonging to the part of the curve of ellipse into a y-value on the minor axis of the ellipse; and
a storage unit configured to store a correspondence relation between coordinates of the pixel belonging to the part of the curve of ellipse and the converted coordinates as an entry of a distortion correction table.

9. The image correction device of claim 8, wherein:
wherein a distance between a length of a minor axis of first ellipse and a length of a minor axis of second ellipse is a multiple of a first setting value,
a difference between a length of a major axis of the first ellipse and a length of a major axis of the second ellipse is a multiple of a second setting value, the second setting value is smaller than the first setting value,
the first ellipse and the second ellipse do not have an intersection point therebetween,
the part of the curve of ellipse belongs to one of quadrants of an orthogonal coordinate system and
a correction area of the distortion correction table belongs to a display area.

10. A security control device comprising:
a plurality of cameras, each of which is equipped with a wide-angle lens;
a main server configured to receive wide-angle images from each of the plurality of cameras and control a display device to display at least one of the wide-angle images; and
a sub-sever configured to correct at least one of the wide-angle images in response to a correction command received from the main server and transmit a corrected image to the main server,
wherein at least one of the main server and the sub-server comprises:
a reference setting unit configured to divide an image to be corrected among the plurality of the wide-angle images into an image pickup area where an image is formed and a non-image pickup area where an image is not formed and set a horizontal reference line and a vertical reference line which cross the center of the image pickup area;
a table converting unit configured to configured to set a part of curve of ellipse which has a part of the horizontal reference line as a major axis and a part of the vertical reference line as a minor axis with respect to the center and convert a y-value of a pixel belonging to the part of the curve of ellipse into a y-value on the minor axis of the ellipse;
a storage unit configured to store a correspondence relation between coordinates of the pixel belonging to the part of the curve of ellipse and the converted coordinates as an entry of a distortion correction table; and
an image correction unit configured to generate the corrected image by correcting the image to be corrected using the distortion correction table.

11. The security control device of claim 10, wherein the main server controls the display device to display at least one of the plurality of wide-angle images and a plurality of corrected images which are obtained by correcting the respective wide-angle images, controls the display device to display a corrected image obtained by correcting a first wide-angle image of the plurality of wide-angle images and all of the wide-angle images, other than the first wide-angle image, and controls the display device to display the plurality of corrected images in response to a second command from the user.

12. The security control device of claim 11, wherein a plurality of sub-servers are provided and the main server checks a load thereof and a load of each of the plurality of sub-servers and controls the plurality of wide-angle images to be corrected in an order of the smallest load of the server.
